# EUROPEAN PATENT APPLICATION

(11) **EP 0 615 730 A1**
(43) Date of publication of application: **21.09.1994**
(21) Application number: 93600017.3
(22) Date of filing: 19.11.1993
(51) Int. Cl.: A61C 8/00

(54) **Subperiosteally bone-integrated implant**

(30) Priority: 25.11.1992 GR 92010514
(71) Applicant: Kariotis, Antoniou Efthimios, GR-15669 Papagos (Athens) (GR)
(72) Inventor: Kariotis, Antoniou Efthimios, GR-15669 Papagos (Athens) (GR)
(74) Representative: Spanopoulos, Elias C.

(57) **Abstract**

The Subperiosteally bone-integrated implant is made of titanium, is shaped as a curved "H" and comprises two surfaces: a) the lower or internal (1) and b) the upper or external (2). The lower or internal surface (1) comes into contact with the bone of the jaws when it is implated, it is curved, frequently has different curvature so that it can fit the underlying bone and consists of two curved horns (3) and (4), which bear a spike (9) and (10) in their middle and are connected to each other through a connective bar (5) which bears a small cylinder (6) in its middle. The upper or external (2) bears on each horn a rounded prominence (11) and (12) and the upper surface of the cylinder (6) bears internal thread (7) in order to receive the supragingival post on complation of the implantation. This structure is accompanied by a) a model of the implant (13) made of acrylic resin and b) a celluloid sheet (15) (TEMPLATE).

## Description

The present invention refers to the Subperiosteally bone-integrated implant, which is made of titanium, is shaped as a curved "H" and has been designed to solve those cases of implantology where the usual endosteal implant cannot be applied.

So far, the cause which has prevented the application of an endosteal implant has been the fact that the area where the implant is to be inserted is adjacent to areas of vital importance in the oral cavity. As a result, there is no sufficient bone surface available for the unimpeded and without destruction of these vital anatomical features placement of an endosteal implant.

The anatomical features of the oral cavity which are important during the implantation and which prevent it are the following:
a) The maxillary sinus.
b) The lower alveolar canal and the inferior alveolar nerve.
c) The mental foramica.
d) The nasal cavity.

The present invention of the subperiosteally bone-integrated implant, solves definitely the problems created during the placement of an endosteal implant into the oral cavity.

The subperiosteally bone-integrated implant has two surfaces: a) the lower or internal (1) and b) the upper or external (2).

The lower or internal surface (1), which comes into contact with the bone of the jaws when it is implanted, is curved and frequently, of different curvature so that it can fit the underluing bone. It consists of two curved horns (3) and (4), each of which is 1cm long and both bear a spike (9) and (10), 1mm long, in the middle. The horns are connected to each other through a connective bar (5) which is also 1cm wide and bears in its middle a small cylinder (6), 3.5mm in diammetre and 5mm in height. The cylinder (6) is so placed as to protrude 1.75mm from the external (1) and 1.75mm from the internal surface of the implant.

At a position exactly corresponding to the previously mentioned spikes (9) and (10), each one of the horns of the upper or external surface (2) bears a rounded prominence (11) and (12), 1mm high each.

The upper surface of the cylinder (6) bears a socket with internal thread (7) which receives the supragingival post, on competion of the implantation. Until the placement of the post, the previously mentioned socket is temporarily covered by a simple healing screw (8) of corresponding thread.

Seen in cross section, all the elements of the implant have hemispherical shape and the thickness of the horns and the bar is 1.5mm.

The structure of the subperiosteally bone-integrated implant is also accompanied by:
A) A model (13) of this implant, made of acrylic resin and used for the design and the trial of the insertion space, before this (the implant) is placed into the upper or lower jaw. AND
B) A celluloid sheet (15) shaped as a "H", on which the outline of the subperiosteally bone-integrated implant has been traced and subsequently removed. It is used as a template for the initial design of the insertion space of the implant.

All the surfaces of the subperiosteally bone-integrated implant are covered with titanium spray or titanium plasma (as it is called in implantation terms) except for the spikes (9) and (10), the prominences (11) and (12), the screw (8) and the upper surface of the cylinder (6). Apart from the plasma (titanium spray), we can also use hydroxyapatite coating.

### Description of the mode of application of the device

After having uncovered the bone, we take the transparent sheet (15) and use it as a template in order to trace the shape "H" of the subperiosteally bone-integrated implant onto the surface of the bone.

This is achieved with the use of a round bar, 1.5mm in diametre.

After having traced the shape, we remove the sheet and try out the insertion with the aid of the acrylic model (13). We correct the imperfections of the bone (if any) and try out again the exact placement and fit of the acrylic model (13) is achieved. Afterwards, we take the subperiosteally bone-integrated implant and insert it into the space which we have created. We tap gently the two prominences (11) and (12) with a hammer and chisel so that the spikes (9) and (10) are embedded into the underlying bone and they stabilize the implant. Then, applying the principles of Guided Regeneration we cover the subperiosteally bone-integrated implant with a GORE-TEX membrane, using as struts the two prominences (11) and (12) of the upper surface (2) and the upper side of the cylinder (7). The screw (8) can be used for the better support of the membrane.

After three months, the area above the implant and underneath the membrabe is filled with bone which embeds the implant into its mass.

Advantages of the invention above are that since the depth of the bone in use does not exceed the 3mm, the subperiosteally bone-integrated implant can be placed at any position of the upper or lower jaw with safety and without the danger of hurting vital anatomical features of the oral cavity, whose closeness to the implantation area would have constituded a contraindication. Moreover, it fully covers those cases of implantology where the usual endosteal implant cannot be placed due to the proximity of the implantation area with vital anatomical features and the consequent lack of sufficient bone area for the unhindered and without damage to these vital anatomical features insertion of the previously mentioned implant.

Description of the mode of application of the invention with reference to the plans.
PLAN 1: It shows in cross-section the lower or internal surface (1) of the subperiosteally bone-integrated implant, which is curved and whose two horns (3) and (4),which are connected to each other through a connective bar (5), are curved (convex). At each horn of the lower or internal surface (1) there is a spike (9) and (10).
PLAN 2: It shows in cross-section the upper or external surface (2) of the subperiosteally bone-integrated implant, which, at each horn and at a position exactly corresponding to the spikes (9) and (10) of the lower or internal surface (1), bears two rounded prominences (11) and (12) and the cylinder (6) of the connective bar (5) bears internal thread (7), which is temporarily covered by a screw (8) till the placement of the post.
PLAN 3: It shows in cross-section the upper or external surface (2) of the subperiosteally bone-integrated implant where the upper surface of the cylinder (5) has been covered by the healing screw (8).
PLAN 4: It shows in crooss-section a model (13) of the subperiosteally bone-integrated implant, with the only difference that the prominences (11) and (12) and the spikes (9) and (to) are absent. Also, the cylinder (6) is compact and does not bear a screw at its upper surface.
PLAN 5: It shows in cross-section, shaped as an "H", a celluloid surface (15) as a template where the outline of the surface of plan 1 has been cut away.

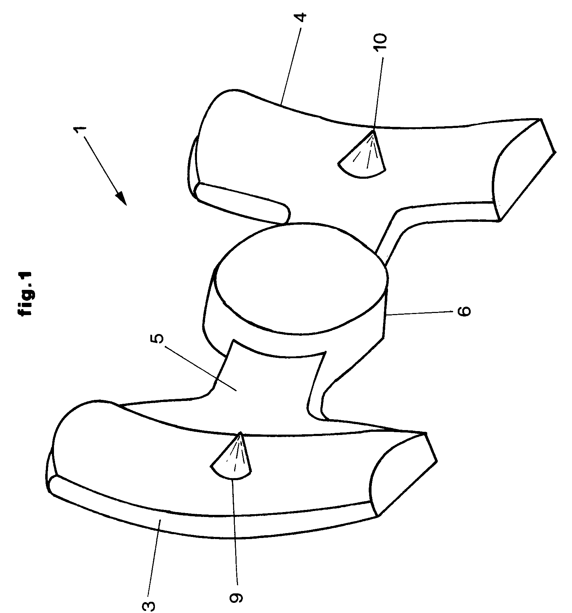

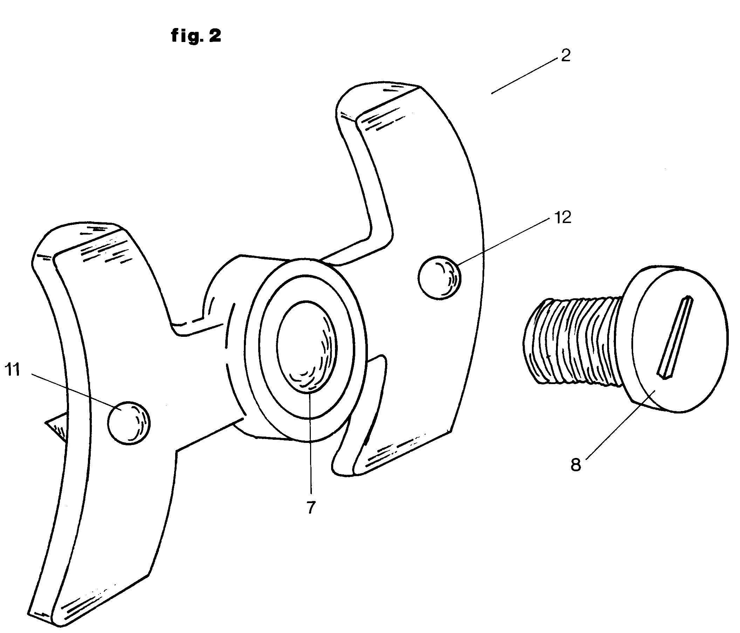

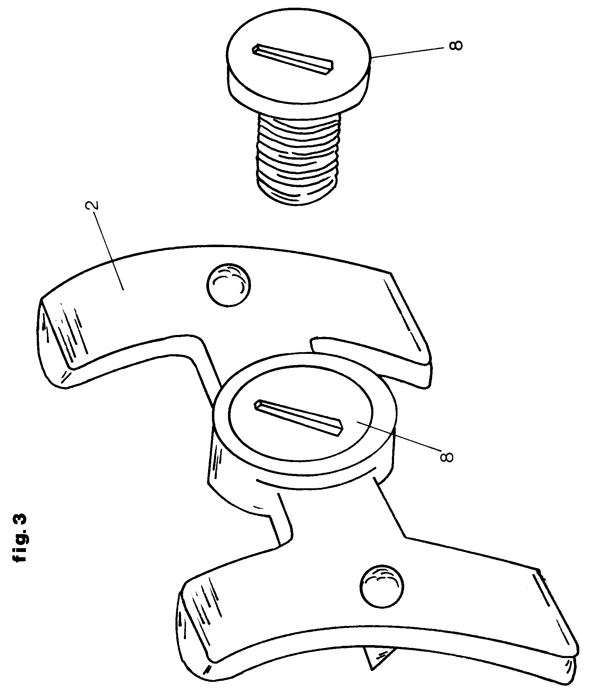

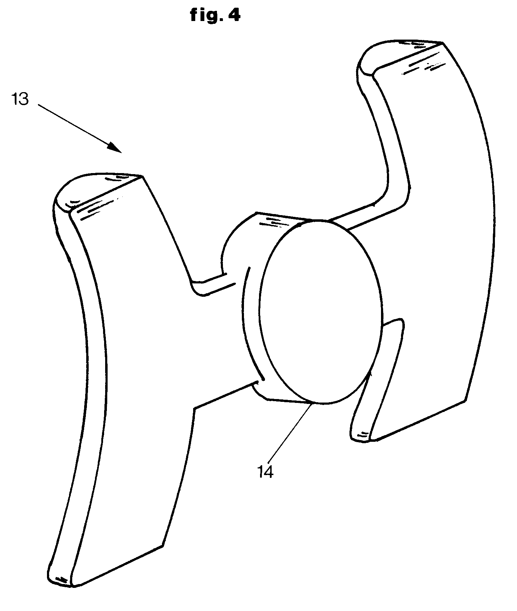

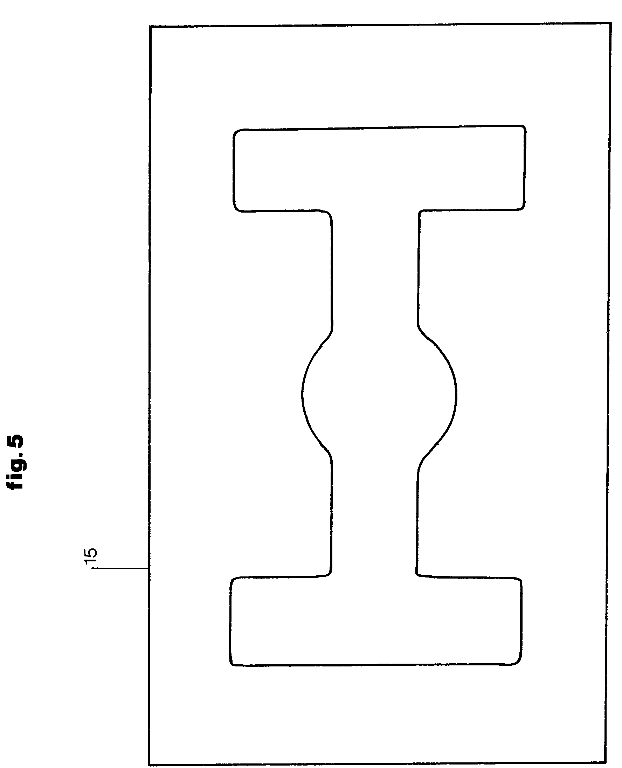

## Claims

1. The subperiosteally bone-integrated implant is made of titanium, has two surfaces a) the lower or internal one (1) and b) the upper or external one (2), it is shaped as a curved "H" and is characterized by the fact that the lower or internal surface (1), which, when inserted, comes into contact with the bone of the jaws, it is curved and frequently of different curvative so that it fits the underlying bone, and consists of two convex horns (3) and (4), each of which is 1cm long and in their middle they bear a spike each, (9) and (10), 1mm long, which (the spikes) are used for the initial retention of the implant and for the prevention of its removal postoperatively, until the entire implant is covered by bone. The two horns (3) and (4) are connected to each other through a connective bar (5) which is 1cm wide and in its middle it bears a small cylinder (6), 3.5mm in diametre and 5mm in height, which is so placed as to protrude 1.75mm from the internal (1) as well as 1.75mm from the external surface (2) of the implant.
The upper or external surface (2) of the subperiosteally bone-integrated implant bears, at each one of its horns and at a position exactly corresponding to the two spikes (9) and (10) of the internal surface (1), two rounded prominences (11) and (12), 1mm high each, which are used to keep the membrane at a distance from the bone, additionally assisted in this function by the cylinder (6). Moreover, these two prominences (11) and (12) receive the taps the hammer during nailing, since the damage at any other area of the implant must be avoided.
The upper surface of the cylinder (6) bears internal thread (7) which receives the supragingival post on completion of the implantation. Until the placement of the post, this socket is temporarily covered by a simple healing screw (8) of appropriate thread.
Seen in cross-section, all the elements of the implant have hemispherical shape and the thickness of the horns and the connective bar is 1.5mm

2. The subperiosteally bone-integrated implant, according to Claim 1, is characterized by the fact that its previously mentioned structure is accompanied by: A) A model (13) of this implant which is made of acrylic resin and is used for design and trial of the upper or lower jaw. With this model (13) we test whether we created bone space is sufficient to receive the implant.
Moreover, since more than one trials are necessary, we make use of this model (13), thus protecting the actual subperiosteally bone-integrated implant from any infections that should occure during the repeated trials. AND B) A celluloid sheet (15), shaped as an "H", where the outline of the subperiosteally bone-integrated implant has been designed and subsequently removed. This is used as a template for the initial design of the insertion of the implant. With the aid of this transparent membrane we trace shape "H" of the implant onto the bone.
